# DEMANDE DE BREVET EUROPEEN

(11) **EP 1 726 479 A2**
(43) Date de publication de la demande: **29.11.2006**
(21) Numéro de dépôt: 06290838.9
(22) Date de dépôt: 23.05.2006
(51) Int. Cl.: B60Q 1/00

(54) **Dispositif d'éclairage ou de signalisation pour véhicule automobile**

(30) Priorité: 27.05.2005 FR 0505408
(71) Demandeur: VALEO VISION, 93012 Bobigny Cédex (FR)
(72) Inventeur: Gomez Ruiz, Carlos, 23600 Martos (ES)

(57) **Abrégé**

La présente invention concerne un dispositif d'éclairage ou de signalisation pour véhicule automobile, comportant une source lumineuse (12), un guide de lumière (10) associé à la source lumineuse (12), les rayons lumineux (R₁, R₂, R₃, R₄) issus de la source lumineuse (12) pénétrant dans le guide de lumière (10) par une face d'entrée (14) et se propageant dans le guide de lumière (10) pour en émerger sensiblement parallèlement à une direction générale d'émission (X-X) par une face de sortie (16).

Selon la présente invention, le guide (10) comporte au moins une paroi intermédiaire interne (17) ou une paroi latérale (18) sur laquelle les rayons lumineux (R₂, R₃, R₄) subissent au moins une réflexion totale.

## Description

La présente invention concerne les dispositifs d'éclairage ou de signalisation pour véhicules automobiles.

Il est courant de rassembler dans un seul boîtier plusieurs fonctions d'éclairage ou de signalisation, de manière à simplifier le câblage électrique de ces différentes fonctions dans un véhicule automobile. Chaque fonction comporte une source lumineuse, en général un réflecteur et éventuellement une glace, ces différents éléments étant agencés pour fournir un faisceau d'éclairage ou de signalisation dont les caractéristiques géométriques et photométriques doivent être conformes à différentes réglementations.

Chaque fonction nécessite ainsi un volume minimal pour son implantation dans un dispositif d'éclairage ou de signalisation particulier. Cependant, le volume disponible pour implanter des dispositifs d'éclairage ou de signalisation est de plus en plus réduit aussi bien à l'avant qu'à l'arrière d'un véhicule automobile moderne. En effet, les contraintes de l'aérodynamique et les conceptions des stylistes conduisent à des formes souvent très différentes de celles qui résultent uniquement de considérations techniques. Il en résulte que dans de nombreux cas, l'espace disponible pour regrouper ces fonctions dans un même boîtier est insuffisant, et qu'il est alors nécessaire de répartir différentes fonctions dans des boîtiers différents, d'où un accroissement du coût et une augmentation du temps de câblage et de montage.

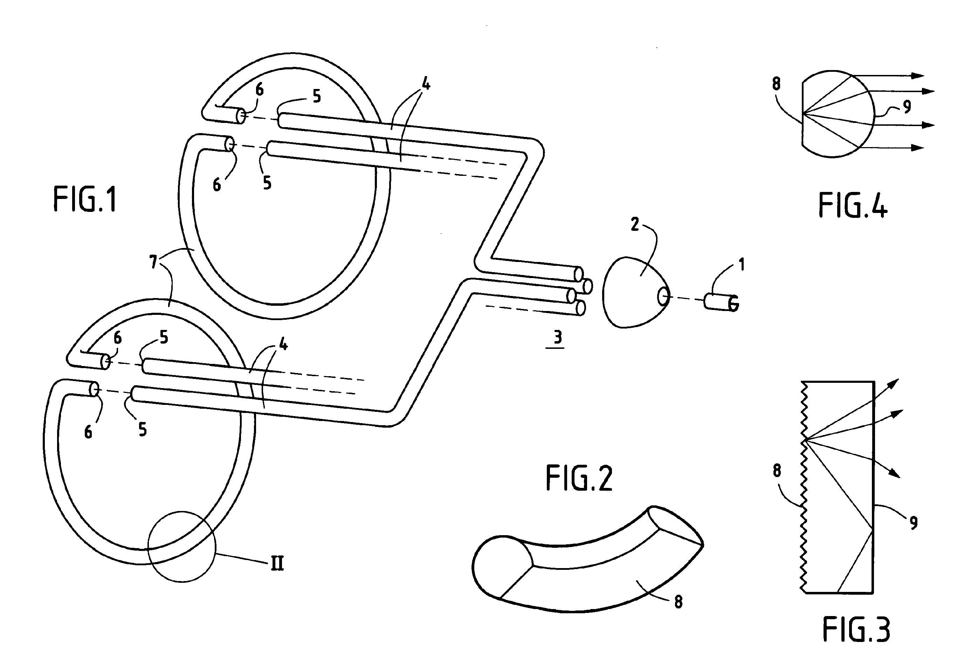

On a déjà tenté de résoudre ce problème en utilisant des guides de lumière. On a représenté sur les Figures 1 à 4 un exemple d'un dispositif mettant en oeuvre une telle solution. On voit sur la Figure 1 qu'une lampe 1 est destinée à être montée dans un réflecteur 2 de manière à concentrer les rayons lumineux issus de la lampe 1 sur la face d'entrée 3 de fibres optiques ou de groupes de fibres optiques 4. Le réflecteur 2 est par exemple du type elliptique, la source lumineuse de la lampe 1 étant placée au voisinage d'un premier foyer du réflecteur 2, les faces 3 étant disposées au voisinage du deuxième foyer du réflecteur 2. Les faces de sorties 5 des fibres optiques 4 sont couplées aux faces d'entrée 6 de guides de lumière 7.

Les guides de lumière 7, dans l'exemple représenté, sont configurés pour s'étendre selon un motif circulaire, et ils sont disposés par exemple de manière à entourer le périmètre avant d'un projecteur de faisceau de croisement. Les guides de lumière 7 sont par exemple conformes à ceux qui sont décrits dans le document DE-A-41 29 094. Ils comportent, comme on le voit mieux sur la Figure 2, une face 8 formée d'une succession de prismes ou de stries, et une face de sortie 9, cylindrique ou torique. Les prismes ou stries de la face 8 renvoient les rayons lumineux se propageant dans le guide vers la face 9 (Figure 3) qui en fournit un faisceau de sortie, qui peut par exemple remplir la fonction de lampe de ville dans un projecteur.

Une telle solution est particulièrement onéreuse, puisqu'elle nécessite une source lumineuse telle qu'une lampe à halogènes, un réflecteur elliptique, un faisceau souple de fibres optiques et un guide de lumière rigide en verre ou en matière plastique, dont une des faces est usinée pour former sur elle des prismes ou des stries. De plus, elle présente comme inconvénient que les rayons lumineux qui se propageant dans le guide sont déviés par les stries ou les prismes de manière incontrôlée, ce qui provoque de nombreuses pertes de lumière. D'autre part, la structure périodique des stries ou des prismes se retrouve dans le faisceau émergeant, de sorte que le guide de lumière présente un aspect fortement inhomogène. Enfin, cette solution présente l'inconvénient d'un encombrement important pour pouvoir loger la source lumineuse, le réflecteur, les fibres optiques et les guides de lumière.

La présente invention se place dans ce contexte et elle a pour but de proposer un dispositif d'éclairage ou de signalisation qui permette facilement de disposer une fonction d'éclairage et de signalisation supplémentaire dans un projecteur, un tel dispositif d'éclairage ou de signalisation devant en outre être simple à assembler, fiable dans son fonctionnement, peu encombrant, les performances photométriques répondant à la réglementation en vigueur, un tel dispositif devant en outre être peu onéreux.

L'invention a donc pour objet un dispositif d'éclairage ou de signalisation pour véhicule automobile, comportant une source lumineuse, un guide de lumière associé à la source lumineuse, les rayons lumineux issus de la source lumineuse pénétrant dans le guide de lumière par une face d'entrée et se propageant dans le guide de lumière pour en émerger sensiblement parallèlement à une direction générale d'émission par une face de sortie, le guide comportant au moins une paroi intermédiaire interne ou une paroi latérale sur laquelle les rayons lumineux subissent au moins une réflexion totale.

Selon la présente invention, la source lumineuse est associée à un système optique tel que les rayons lumineux sont émis sur 360° autour de l'axe de cette source, dans un angle d'environ ± 30° par rapport au plan horizontal perpendiculaire à l'axe optique de la source.

Selon d'autres caractéristiques de la présente invention :
- le guide comporte une section centrale et au moins une section latérale séparées par au moins une paroi intermédiaire interne ;
- la direction des rayons lumineux émis par la source lumineuse traversant la section centrale n'est modifiée que par des réfractions sur les faces d'entrée et de sortie ;
- la direction des rayons lumineux émis par la source lumineuse traversant une section latérale est modifiée par au moins une réflexion totale sur au moins une paroi intermédiaire interne ou une paroi latérale ;
- la source lumineuse est constituée par au moins une diode électroluminescente ;
- la source lumineuse est associée à un moteur de lumière comportant une face d'entrée, une face arrière de réflexion, une face avant de réflexion et une face de sortie, le moteur de lumière émettant radialement vers l'extérieur les rayons qu'il reçoit de la source lumineuse ;
- l'épaisseur du guide est faible devant sa largeur ;
- la face de sortie du guide a la forme d'un rectangle très allongé ;
- face de sortie du guide s'étend sur une portion de circonférence.

D'autres buts, caractéristiques et avantages de la présente invention ressortiront clairement de la description qui va maintenant être faite d'un exemple de réalisation donné à titre non limitatif en référence aux dessins annexés sur lesquels :
- la Figure 1 déjà commentée représente une vue schématique en perspective d'un mode de réalisation de l'art antérieur ;
- la Figure 2 représente une vue à plus grande échelle du détail II de la Figure 1 ;
- la Figure 3 représente une vue en coupe longitudinale du guide de lumière des Figures 1 et 2 ;
- la Figure 4 représente une vue en coupe transversale du guide de lumière des Figures 1 et 2 ;
- la Figure 5 représente une vue de ¾ arrière en perspective isométrique d'une moitié de guide de lumière selon la présente invention ;
- la Figure 6 représente une vue de ¾ avant en perspective isométrique d'une première variante de réalisation d'un guide de lumière selon la présente invention ;
- la Figure 7 représente une vue de ¾ avant en perspective isométrique d'une deuxième variante de réalisation d'un guide de lumière selon la présente invention ;
- la Figure 8 représente une vue de ¾ avant en perspective isométrique d'une troisième variante de réalisation d'un guide de lumière selon la présente invention ;
- la Figure 9 représente le diagramme de rayonnement d'une diode électroluminescente utilisable avec le guide de lumière de l'une des Figures 5 à 8,
- la Figure 10 représente une variante de source lumineuse utilisable avec le guide de lumière de l'une des Figures 5 à 8, et
- la Figure 11 représente en vue éclatée une quatrième variante de réalisation d'un guide de lumière selon la présente invention.

Par convention, dans la présente description, on appelle « avant » la direction dans laquelle le faisceau lumineux final est émis, et « arrière » la direction opposée.

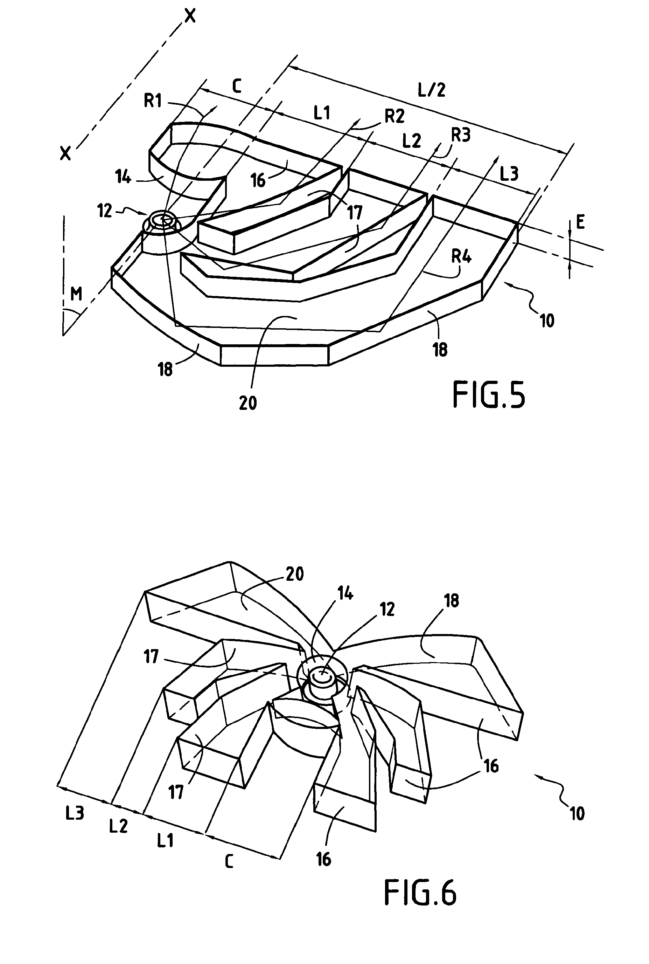

Pour des raisons de clarté, on n'a représenté sur la Figure 5 qu'une moitié de guide de lumière, réalisé conformément à la présente invention, et désigné dans son ensemble par la référence 10. Le guide complet est constitué de la réunion de la moitié représentée et d'une autre moitié symétrique par rapport à un plan médian M vertical, ainsi qu'on a représenté par exemple des variantes de guide sur les Figures 6, 7, 8 et 11.

Le guide 10 est associé à une source de lumière 12, constituée par exemple par une diode électroluminescente. Les rayons lumineux émis par cette source 12 pénètrent dans le guide 10 par une face d'entrée 14, et en ressortent par une face de sortie 16, leur direction après la face de sortie 16 étant sensiblement parallèle à une direction générale X-X, orientée d'arrière en avant.

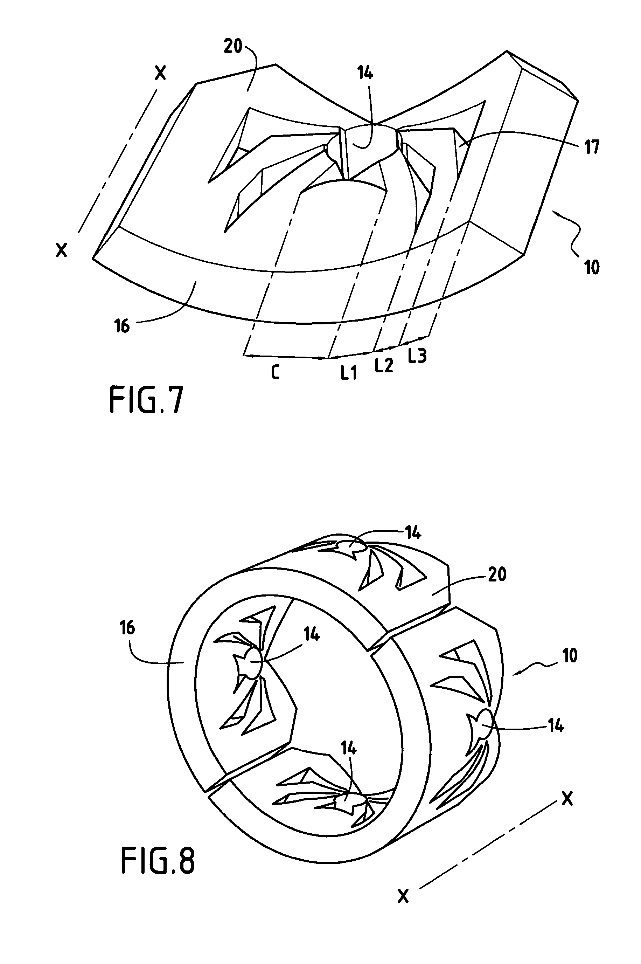

Conformément à la présente invention, le guide 10 est constitué d'un bloc 20 de matériau transparent dont l'épaisseur E est beaucoup plus faible que sa largeur L. A titre d'exemple non limitatif, la largeur L pourra être vingt fois supérieure à l'épaisseur E. La face de sortie 16 a ainsi la forme d'un rectangle très allongé. Un tel guide pourra être réalisé en un matériau thermoplastique tel que le polycarbonate (PC), ou le polyméthyl méthacrylate (PMMA) ou en tout autre matériau transparent, par exemple du verre. Dans les exemples de réalisation représentés sur les Figures 5, 6 et 11, l'épaisseur est comptée dans le sens vertical, de sorte que le guide 10 a ses faces supérieures et inférieures sensiblement horizontales. Dans les exemples de réalisation représentés sur les Figures 7 et 8, la face de sortie 16 du guide 10 a une forme incurvée, l'épaisseur est comptée dans le sens radial et la largeur dans le sens circonférentiel.

La face d'entrée 14 du bloc 20 entoure complètement la source 12 de manière à ce qu'une majorité des rayons lumineux émis par la source pénètre dans ce bloc.

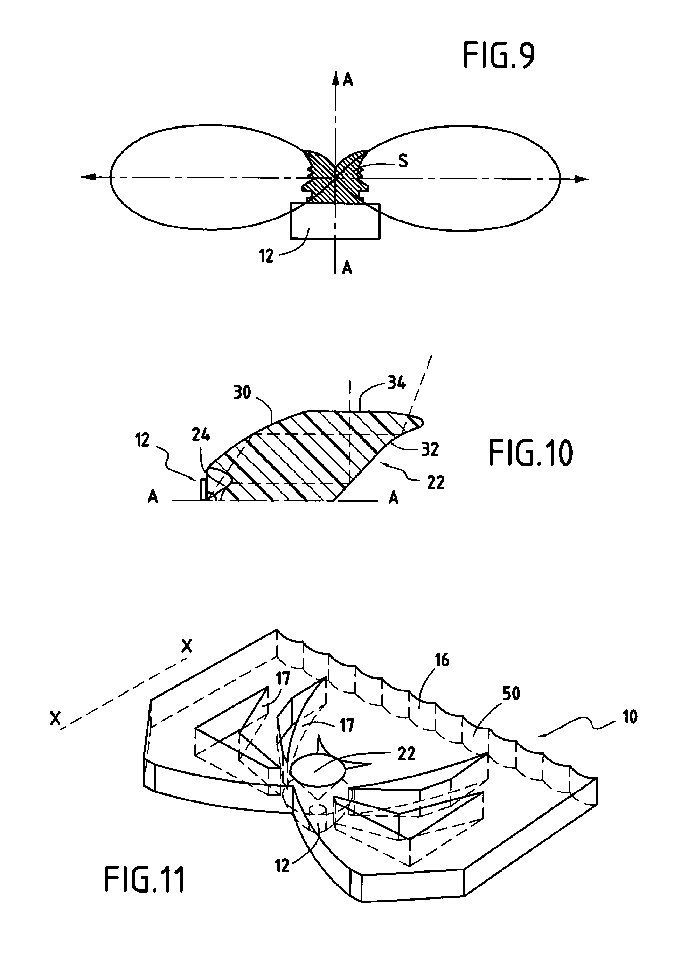

Avantageusement, on utilisera une source lumineuse 12 ayant un diagramme de rayonnement tel que celui qui est représenté sur la Figure 9, et telle que les rayons lumineux sont émis sur 360° autour de l'axe A-A de cette source, situé dans le plan médian M, dans un angle d'environ ± 30° par rapport au plan horizontal perpendiculaire à l'axe optique A-A de la source. Une telle source lumineuse 12 à diode électroluminescente est par exemple décrite dans le document US-A-6 679 621 et comporte une optique primaire S procurant un tel diagramme de rayonnement.

On pourra également utiliser un système optique approprié en association avec une diode électroluminescente munie d'une optique primaire classique, ainsi qu'on l'a représenté sur la Figure 10. Un tel système optique est analogue au moteur de lumière décrit par exemple dans le document EP-A-1 416 220.

Le moteur de lumière 22 représenté sur la Figure 10 comporte une face d'entrée 24, qui est agencée axialement en regard de la diode 12. Le profil de la face d'entrée 24, en section axiale, est tel que la majorité des rayons lumineux émis par la diode 12 pénètre dans le moteur de lumière 22.

La face d'entrée 24 comporte une portion centrale coaxiale formant collimateur, qui a une forme globalement hémisphérique et convexe vers l'arrière, et une portion périphérique annulaire coaxiale, qui a une forme globalement hémisphérique et concave vers l'avant.

Le profil hémisphérique de la portion centrale de la face d'entrée 24 est tel que la majorité des rayons lumineux reçus, en provenance de la diode 12, se réfracte à l'intérieur du moteur de lumière 22 en étant déviés, de manière que ces rayons lumineux pénètrent dans le moteur de lumière 22 en suivant une direction sensiblement parallèle à l'axe optique A-A.

La portion hémisphérique périphérique de la face d'entrée 24 est centrée sur la diode 12, de manière que la majorité des rayons lumineux reçus par la portion hémisphérique périphérique, en provenance de la diode 12, se réfracte à l'intérieur du moteur de lumière 22 sans être déviés.

Le moteur de lumière 22 comporte une face arrière de réflexion 30 de forme annulaire parabolique concave. La face arrière de réflexion 30 est conçue pour réfléchir axialement vers l'avant, selon le principe de la réflexion totale, les rayons lumineux qui entrent dans le moteur de lumière 22 par la portion périphérique de la face d'entrée 24. A cet effet, le foyer de la parabole formant la face arrière de réflexion 30 est sensiblement confondu avec la source lumineuse 12.

Le moteur de lumière 22 comporte une face avant de réflexion 32 de forme globalement conique convexe et coaxiale. La face avant de réflexion 32 est conçue pour réfléchir, selon le principe de la réflexion totale, les rayons lumineux qui cheminent à l'intérieur du moteur de lumière 22, vers une face cylindrique de sortie 34.

La face avant de réflexion 32 comporte une portion centrale conique qui est agencée axialement en vis-à-vis de la face d'entrée 24 et axialement en vis-à-vis d'une partie de la face arrière de réflexion 30.

L'angle au sommet de la portion conique est d'environ quatre-vingt-dix degrés, de sorte que les rayons lumineux qui atteignent cette portion conique, et qui sont parallèles à l'axe optique A-A, soient réfléchis radialement vers l'extérieur.

Les rayons émis par la source 12 frappent ainsi la face d'entrée 14 du guide 10 sous une incidence prédéterminée, la face d'entrée leur faisant subir une réfraction leur imposant une première déviation. Les rayons se propagent ensuite dans le guide 10, en pouvant y subir des réflexions totales sur les faces supérieure et inférieure de ce guide.

Le guide 10 est partagé en plusieurs sections par des parois intermédiaires 17. Le guide 10 comporte ainsi par exemple une section centrale C, située en avant de la source lumineuse 12, et dans laquelle les rayons lumineux tels que R₁ ne subissent qu'une réfraction à la traversée des faces d'entrée et de sortie 14 et 16, et éventuellement des réflexions totales sur les faces supérieure et inférieure de la section centrale C. Les faces d'entrée et de sortie 14 et 16 sont configurées pour que les rayons lumineux émergents soient sensiblement parallèles à la direction générale X-X. La face de sortie de la section centrale C pourra, ainsi qu'on l'a représenté sur la Figure 5, être légèrement convexe. Les éventuelles réflexions totales sur les faces supérieure et inférieure ne modifient pas la direction de propagation dans le plan général du guide.

Le guide 10 comporte également des sections latérales L₁, L₂ et L₃ dans les exemples représentés, dont les faces de sortie 16 sont coplanaires dans l'exemple de la Figure 5, et parallèles dans l'exemple de la Figure 6, et perpendiculaires à la direction générale X-X. Les faces de sortie 16 peuvent même être confondues, comme on l'a représenté sur les Figures 7, 8 et 11.

Chaque section latérale reçoit les rayons lumineux qui ont pénétré dans le guide 10 par la face d'entrée 14, dans la partie de cette section la plus proche de la source lumineuse 12, et comporte au moins une paroi intermédiaire 17 faisant subir aux rayons lumineux au moins une réflexion totale, de manière à les faire émerger par la face de sortie 16, dans une direction sensiblement parallèle à la direction générale X-X.

Comme on peut le voir sur les Figures 5 et 6, la première section latérale L₁ est délimitée par une partie de la face d'entrée 14, une face de sortie 16 et une paroi intermédiaire 17 imposant une réflexion totale à des rayons tels que R₂, alors que les autres sections L₂ et L₃ comportent deux telles parois intermédiaires 17, l'une au moins de ces parois intermédiaires imposant une réflexion totale à des rayons tels que R₃ et R₄. Les parois intermédiaires 17 séparent le volume du guide en sections distinctes, chacune guidant une partie du flux lumineux émis par la source 12 vers les faces de sortie 16.

La section latérale extrême, en l'occurrence la section L₃, est délimitée par une partie de la face d'entrée 14, une face de sortie 16, une paroi intermédiaire 17 et une paroi latérale 18, imposant une réflexion totale à des rayons tels que R₄.

Par un choix approprié des angles que font les faces intermédiaires 17 ou latérales 18 avec la direction générale X-X, les rayons lumineux pourront être répartis sensiblement uniformément sur les faces de sortie 16. Dans les sections latérales comme dans la section centrale, les éventuelles réflexions totales sur les faces supérieure et inférieure ne modifient pas la direction de propagation dans le plan général du guide.

Il est ainsi possible de répartir la totalité du flux lumineux émis par la source lumineuse 12 sur les faces de sortie 16, en n'utilisant que la réflexion totale sur les parois intermédiaires 17 du guide 10, et éventuellement sur les parois supérieure et inférieure, de manière à ce que l'éclairement des faces de sortie soit homogène.

De manière à parfaire l'homogénéité du faisceau lumineux émergeant du guide 10, ou à lui conférer une photométrie particulière en matière de géométrie, ou même à lui conférer un style particulier, il sera possible de munir la face de sortie d'aménagements optiques 50, comme on l'a représenté sur le Figure 11.

De même, il sera possible de conférer à la face de sortie 16 une forme autre que rectangulaire. Ainsi qu'on l'a représenté sur les Figures 7 et 8, le guide 10 peut être incurvé, de manière à ce que sa plus grande dimension, en l'occurrence sa largeur L, soit mesurée sur un arc de cercle, et que sa plus petite dimension, l'épaisseur E, soit mesurée radialement.

On pourra alors réaliser un guide 10 dont la face de sortie 16 s'étend sur une portion de circonférence, par exemple sur environ un quart de cercle, ainsi qu'on l'a représenté sur la Figure 7. Il sera ainsi possible de réunir quatre guides 10 tels que celui qui est représenté sur la Figure 7, pour obtenir un ensemble tel que celui qui est représenté sur la Figure 8, dont la face de sortie 16 s'étend pratiquement de manière continue selon un cercle entier.

On a donc bien réalisé un dispositif d'éclairage ou de signalisation qui permet facilement de disposer une fonction d'éclairage et de signalisation supplémentaire dans un projecteur. En effet, l'invention permet de donner aux faces de sortie 16 une épaisseur E relativement faible, par exemple inférieure à 20 millimètres. L'encombrement d'un tel guide est donc minimal, ce qui autorise son implantation dans un volume faible.

Un tel dispositif d'éclairage ou de signalisation est en outre particulièrement simple à réaliser, puisqu'il est constitué d'une seule pièce, aucun réglage n'étant nécessaire. De plus le faisceau lumineux obtenu est d'une grande homogénéité, ce qui permet d'obtenir facilement des performances photométriques répondant à la réglementation en vigueur.

Bien entendu, la présente invention n'est pas limitée aux modes de réalisation qui ont été décrits, mais l'homme du métier pourra au contraire lui apporter de nombreuses modifications qui rentrent dans son cadre. C'est ainsi que la face de sortie pourra être disposée de manière à ce que sa plus grande dimension soit verticale. De même, les faces de sortie pourront avoir une forme autre que plane, par exemples convexes ou concaves

## Revendications

1. Dispositif d'éclairage ou de signalisation pour véhicule automobile, comportant une source lumineuse (12), un guide de lumière (10) associé à la source lumineuse (12), les rayons lumineux (R₁, R₂, R₃, R₄) issus de la source lumineuse (12) pénétrant dans le guide de lumière (10) par une face d'entrée (14) et se propageant dans le guide de lumière (10) pour en émerger sensiblement parallèlement à une direction générale d'émission (X-X) par une face de sortie (16), le guide (10) comportant au moins une paroi intermédiaire interne (17) ou une paroi latérale (18) sur laquelle les rayons lumineux (R₂, R₃, R₄) subissent au moins une réflexion totale, **caractérisé en ce que** la source lumineuse (12) est associée à un système optique (S) tel que les rayons lumineux sont émis sur 360° autour de l'axe de cette source, dans un angle d'environ ± 30° par rapport au plan horizontal perpendiculaire à l'axe optique de la source.

2. Dispositif selon la revendication 1, **caractérisé en ce que** le guide comporte une section centrale (C) et au moins une section latérale (L₁, L₂, L₃) séparées par au moins une paroi intermédiaire interne (17).

3. Dispositif selon la revendication 2, **caractérisé en ce que** la direction des rayons lumineux (R₁) émis par la source lumineuse (12) traversant la section centrale (C) n'est modifiée que par des réfractions sur les faces d'entrée (14) et de sortie (16).

4. Dispositif selon la revendication 3, **caractérisé en ce que** la direction des rayons lumineux (R₂, R₃, R₄) émis par la source lumineuse (12) traversant une section latérale (L₁, L₂, L₃) est modifiée par au moins une réflexion totale sur au moins une paroi intermédiaire interne (17) ou une paroi latérale (18).

5. Dispositif selon l'une quelconque des revendications précédentes, **caractérisé en ce que** la source lumineuse (12) est constituée par au moins une diode électroluminescente (12).

6. Dispositif selon l'une quelconque des revendications 1 à 5, **caractérisé en ce que** la source lumineuse (12) est associée à un moteur de lumière (22) comportant une face d'entrée (24), une face arrière de réflexion (30), une face avant de réflexion (32) et une face de sortie (34), le moteur de lumière (22) émettant radialement vers l'extérieur les rayons qu'il reçoit de la source lumineuse (12).

7. Dispositif selon l'une quelconque des revendications précédentes, **caractérisé en ce que** l'épaisseur (E) du guide (10) est faible devant sa largeur (L).

8. Dispositif selon la revendication précédente, **caractérisé en ce que** la face de sortie (16) du guide (10) a la forme d'un rectangle très allongé.

9. Dispositif selon la revendication 8, **caractérisé en ce que** la face de sortie (16) du guide (10) s'étend sur une portion de circonférence.
